# EUROPÄISCHE PATENTSCHRIFT

(11) **EP 1 816 940 B1**
(45) Veröffentlichungstag und Bekanntmachung des Hinweises auf die Patenterteilung: **10.04.2013**
(21) Anmeldenummer: 05786503.2
(22) Anmeldetag: 06.10.2005
(51) Int. Cl.: A47J 37/12

(54) **VORRICHTUNG ZUM EINTAUCHEN EINES BEHÄLTERS IN EIN TAUCHBAD ZUM ERHITZEN VON NAHRUNGSMITTELN**
DEVICE FOR IMMERSING A CONTAINER IN AN IMMERSION BATH FOR HEATING FOODSTUFFS
DISPOSITIF POUR PLONGER UN CONTENANT DANS UN BAIN D'IMMERSION AFIN DE CHAUFFER DES ALIMENTS

(30) Priorität: 07.10.2004 CH 16522004
(43) Veröffentlichungstag der Anmeldung: 15.08.2007
(60) Teilanmeldung: 11162851.7
(73) Patentinhaber: Elro (Holding ) AG, 5620 Bremgarten (CH)
(72) Erfinder: STEIGER, Patrick, CH-5612 Villmergen (CH)
(74) Vertreter: Liebetanz, Michael
(86) Internationale Anmeldenummer: PCT/CH2005/000582
(87) Internationale Veröffentlichungsnummer: WO 2006/037252

(56) Entgegenhaltungen:
- DE-U1-202004 008 865
- DE-U1-202004 008 866

## Beschreibung

Die Erfindung betrifft eine Vorrichtung zum Eintauchen eines Behälters in ein Tauchbad zum Erhitzen von Nahrungsmitteln gemäss dem Oberbegriff des Anspruchs 1.

Aus dem Stand der Technik sind eine Vielzahl von solchen Vorrichtungen bekannt. Die einfachsten Vorrichtungen sind Körbe, die direkte die zu erhitzenden Nahrungsmittel aufnehmen. Dabei handelt es sich bei der Flüssigkeit des Tauchbades beispielsweise um Frittieröl.

Ein Mechanism zur Bewegung eins Kurbes in eine Friteure mit dem Merkmalends Oberbegriff des Anspruchs 1 ist aus der DE-202004008866-V1 bekannt Andere Vorrichtungen umfassen nur eventuell nach oben offene Behälter, die in eine aufgeheizte Flüssigkeit eingetaucht werden, so dass die im Behälter befindlichen Nahrungsmitteln indirekt über beispielsweise ein Wasserbad erhitzt werden.

Im Grossküchenbereich handelt es sich dabei um Behälter die gefüllt ein hohes Gewicht annehmen können. Das gilt ebenfalls für einzuhängende Körbe mit Frittiergut.

Problematisch ist in diesem Zusammenhang die Reinigung oder Füllung des Tauchbades, da der Behälter zugleich für die Temperatur von beispielsweise Frittieröl ausgelegt sein muss, aber für die Benutzer auch die Sicherheit bei einem Wasserbad aufweisen muss. Entsprechende Kombigeräte bestehen daher keine.

Ausgehend von diesem Stand der Technik liegt der Erfindung die Aufgabe zugrunde eine eingangs genannte Vorrichtung so auszugestalten, dass sich die Sicherheit für einen Benutzer erhöht, insbesondere im Hinblick auf die Gefahr durch die heissen Flüssigkeiten (Öl, Wasser), die zum Zubereiten der Nahrungsmittel verwendet werden.

Diese Aufgabe wird erfindungsgemäss durch die Merkmale der Anspruchs 1 gelöst.

Weitere vorteilhafte Ausführungsformen sind in den Unteransprüchen niedergelegt.

Die Erfindung wird nachfolgend unter Bezugnahme auf die beigefügten Zeichnungen anhand von Ausführungsbeispielen näher beschrieben. Es zeigen:
- Fig. 1: eine schematische perspektivische Vorderansicht einer Vorrichtung nach einem Ausführungsbeispiel der Erfindung,
- Fig. 2: eine schematische perspektivische Rückansicht der Vorrichtung nach Fig. 1, und
- Fig. 3: eine sehr schematische Seitenansicht der Vorrichtung mit Sensoren für eine Steuerschaltung.

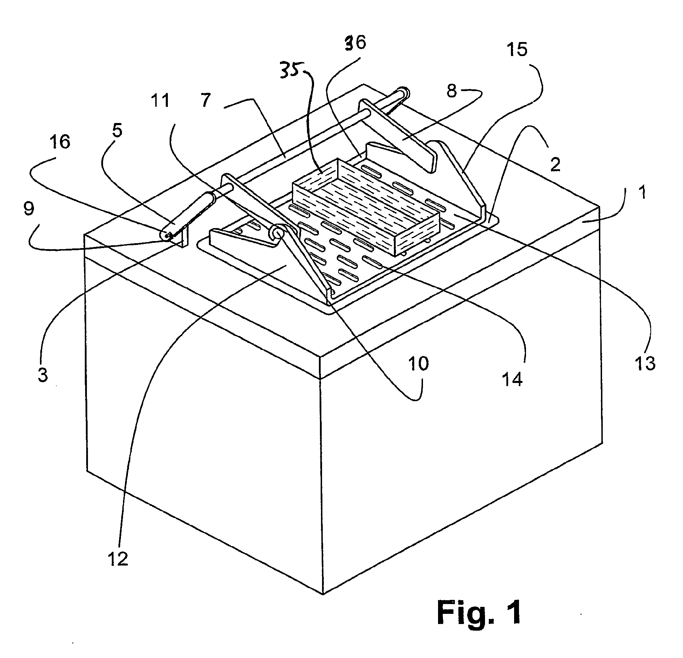

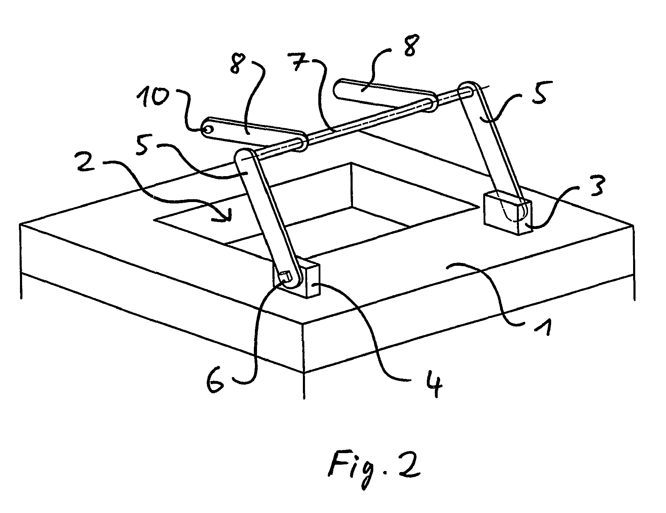

Die Fig. 1 zeigt eine schematische perspektivische Vorderansicht einer Vorrichtung nach einem Ausführungsbeispiel der Erfindung. Das Küchengerät 1 verfügt über ein Eintauchbecken 2. Auf der Oberseite des Küchengerätes 1 sind zwei Lagerböcke 3 und 4 angeordnet. Ein Tragarm 5 wird auf diese Lagerböcke 3 und 4 aufgesteckt. Auf der Antriebsseite, die über den Lagerbock 4 realisiert wird und in der Fig. 2 zu sehen ist, ist als Achse ein Vierkant 6 ausgebildet, damit das Drehmoment des Antriebs auf den Tragarm 5 übertragen werden kann. Der Tragarm 5 hat auf dieser Seite entsprechend ein komplementäres Loch. Durch das Eigengewicht des Tragarmes und angehängter Gegenstände verklemmt der Tragarm am Vierkant und erzeugt eine spielfreie Verbindung.

Auf der Seite des Lagerbockes 3 ist der Tragarm 5 über eine beispielsweise rechteckige seitlich offene Ausnehmung 9, die in einen Rundzapfen 16 eingehängt wird.

Der Tragarm 5 verfügt über eine Querstange 7, die starr mit den seitlichen Armen verbunden ist und an der zwei Laschen 8 fest angebracht sind. An den zwei Laschen 8 sind beispielsweise jeweils Lagerzapfen 10 angeordnet, an denen entsprechende U-Haken 11 einer Hebeplattform 12 angeordnet sind. Somit ist die Hebeplattform 12 frei um eine zur Querstange 7 parallelen Achse verschwenkbar.

Die Hebeplattform 12 verfügt vorteilhafterweise über eine ebene Bodenfläche 13, die seitlich durch die zu den Haken 11 führenden Seitenwände 15 begrenzt ist. Die Bodenfläche 13 ist hier längsgelocht mit einer Reihe von Langlöchern 14. Die Bodenfläche 13 kann beispielsweise an ihrer hinteren Kante 36 über eine als Anschlag wirkende Erhebung verfügen.

Auf die Bodenfläche 13 werden einer oder mehrere Behälter 35 aufgestellt, die in das Tauchbad des Bassins 2 getaucht werden sollen. Die Öffnungen 14 sind vorteilhafterweise relativ klein. Sie sind dennoch ausreichend für den Wärmeübertrag auf die Behälter mit den Nahrungsmitteln und deren Inhalt. Dies ist sowohl korrekt für nach unten geschlossene Behälter 35, die in einem Wasserbad erhitzt werden, als auch für offene Körbe, die als ganzes in Frittieröl eingetaucht werden, wobei dann das Frittieröl durch die Maschen der Körbe direkt mit den Nahrungsmitteln in Kontakt kommt. Der Vorteil der kleinen Löcher liegt dann insbesondere auch darin, dass sicher verhindert wird, dass etwas grösseres (Nahrungsmittel, Verpackung etc.) in das Bassin fällt und Spritzer verursacht, die sowohl bei heissem Wasser als vor allem bei aufgeheiztem Frittieröl zu Verletzungen führen können. Der Vorteil der Hebevorrichtung liegt einerseits darin, dass die Behälter zumeist eben auf der Oberfläche 17 der Vorrichtung auf diese gebracht werden können. Sie können dann weiter parallel, wie es die Fig. 1 zeigt, über die Oberfläche 17 direkt auf die Bodenfläche 13 geschoben werden. Durch die Mechanik und den angetriebenen Zapfen 6 wird die Hebeplattform 12 selber mit den Behältern in das Tauchbad gefahren und die Zubereitung durchgeführt. Bei Beendigung des Arbeitsvorganges wird die Hebeplattform 12 wieder herausgehoben und die Behälter können wiederum auf einer Höhe eben und parallel zur Oberfläche 17 entnommen werden. Dies ist insbesondere für schwere Einsätze ein interessanter Ansatz, da damit vermieden wird, dass sich Mitarbeiter zu sehr nach vorne beugen und in dieser ungünstigen Position schwere Lasten hochheben müssen. Bei einer vorteilhaften Ausgestaltung der Ansteuerung der Mechanik kann die Hebeplattform 12 und damit aufgesetzte Behälter gerüttelt oder geschüttelt werden, so dass Öl oder Wasser von den Behältern oder bei durchlässigen Behälter von dem Kochgut abtropfen kann. Ferner tropft die entsprechende Flüssigkeit auch von der Hebeplattform und der eingetauchten Mechanik ab zurück in das den Garraum bildende Eintauchbecken oder Bassin 2.

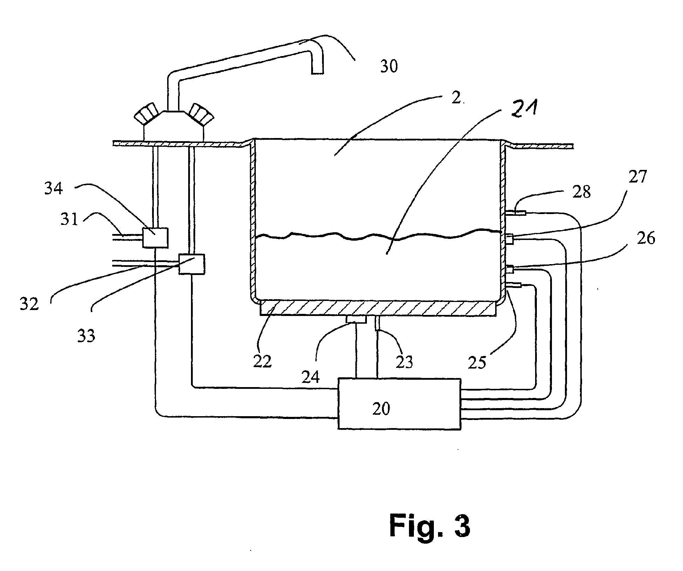

Andererseits liegt ein Vorteil auch darin, dass die Steuereinheit 20, die in der Fig. 3 in einem weiteren Zusammenhang dargestellt ist, eine Steuerfunktion programmiert haben kann, nach einer vorbestimmten (Koch-, Gar- oder Frittier-) Zeit die Hebeplattform 12 aus dem Tauchbad herausverfahren kann, so dass der Zubereitungsvorgang automatisch beendet wird.

Dieser Vorteil kann mit einer weiteren Funktion kombiniert werden. Der Motor, der den Zapfen 6 antreibt, kann durch schnelles Umschalten das Gestänge des Tragarms 5 zum Schwingen und beispielsweise auch in Resonanz bringen. Dann tropfen durch die auftretenden Beschleunigungen anhaftende Flüssigkeitstropfen (sei es Wasser oder Öl) ab, was per Hand nicht erreichbar wäre.

Die Fig. 3 zeigt eine sehr schematische Seitenansicht der Vorrichtung mit Sensoren für die Steuerschaltung 20. Im Bassin 2 ist ein Flüssigkeitsniveau 21. Unterhalb des Bassins 2 ist eine Heizvorrichtung 22 vorgesehen. An der Heizvorrichtung ist ein Bodentemperatursensor 23 und ein Maximaltemperaturbegrenzer 24 angeordnet. An der Seite des Bassins 2 ist in Bodennähe ein erster Temperatursensor 25 neben einem zweiten Temperatursensor 26 und in Füllhöhe ein dritter Temperatursensor 27 neben einem vierten Temperatursensor 28 angeordnet.

Es wird davon ausgegangen, dass das Bassin mit Öl gefüllt ist. Dann steuert die Steuerschaltung 20 die Bodenheizung 22 an und bringt das Öl auf die entsprechende Temperatur, was durch die Sensoren 23, sowie 25 bis 28 überwacht wird. Der Maximaltemperaturbegrenzer 24 überwacht, dass ein Ausfall eines Sensors nicht zu Fehlfunktionen führt. Beim Frittieren darf kein Temperatursensor mehr als 230 Grad Celsius messen. Ansonsten schalten die Maximaltemperaturbegrenzer 24 oder der zweite Temperatursensor 26 die Heizung ab. Während des Betriebs mit Öl steuert die Steuereinheit die schwenkbare Mischbatterie 30, die über einen Kalt-31 und einen Warmwasserzufluss 32 verfügt, die entsprechenden Steuerventile, zumeist Magnetventile, 33 und 34, dass diese sperren, denn es muss verhindert werden, dass Wasser in heisses Öl gegossen wird.

Die Steuereinheit 20 beobachtet hierfür die Temperatur des hohen Temperatursensors 27, der in einer Höhe angerodnet ist, die vom Tauchbad erreichbar ist, das heisst, eingelassenes Öl kann ihn über eine Schwellwerttemperatur erhitzen. Wenn die Steuereinheit eine Temperatur von mehr als einem vorgegebenen Schwellwert von beispielsweise 130 bis 160, insbesondere 140 Grad Celsius misst, ist klar, dass das Bassin 2 mit heissem Öl gefüllt ist. Wäre das Bassin beispielsweise bis zum dargestellten Niveau 21 nur mit Wasser gefüllt, so könnte entstehender Wasserdampf nicht diese Temperatur erreichen. Ist das Gerät dagegen leer, so ist der Temperaturabfall zu gross, um diese Temperatur zu erreichen. Der Temperatursensor 27 regelt daher die Dampfeinlassventile und den Wasserzulauf und sperrt diese, wenn eine hohe Temperatur (grösser beispielsweise 160 Grad Celsius) anzeigt, dass beispielsweise Öl eingelassen ist.

Der Temperatursensor 25 dient der Kontrolle des Kochvorgangs im Kochraum im Sinne einer Regelung. Der Temperatursensor 26 und der Temperatursensor 27 kontrollieren dagegen, im Sinne einer Sperrung, Heizstrom bzw. Wasser- und Dampfzufluss. Der Temperatursensor 28 schaltet die Heizung aus, wenn zuviel Öl im Bassin liegt und die Gefahr besteht, dass das Öl überschäumt.

Vorteilhafterweise verfügt die Steuereinrichtung 20 über eine programmierte Durchflusssteuerung, so dass sie direkt über die Zeit des Öffnens der Mischbatterie 30 ein vorbestimmtes Füllen des Bassins 2 über die Mischbatterie erreichen kann.

Aus der Fig. 1 kann auch ersehen werden, dass die Hebeplattform 12 mit der Fläche 13 genau so gross ist, um die offene Oberfläche des Bassins 2 gerade fast vollständig abzudecken. Somit ist auch in der ausgefahrenen Stellung der Hebeplattform 12 sicher gewährleistet, dass keine Gegenstände in das Bassin 2 fallen können.

Durch die in der Steuereinrichtung 20 realisierten Sicherheitsfunktionen ist es erstmals möglich, eine Druckgarbraisière auch zum Frittieren zu verwenden.

## Patentansprüche

1. Vorrichtung zum Eintauchen eines Behälters (35) in ein Tauchbad (2, 21) zum Erhitzen von Nahrungsmitteln mit einer Steuereinrichtung (20) und mit einem antreibbaren Tragarm (5, 7, 8), sowie einem Behälterträger (13), wobei auf dem Behälterträger (13) ein oder mehrere Behälter (35) angeordnet ist/sind und wobei der Behälterträger (13) an dem besagten Tragarm (5, 7, 8) befestigbar ist, welcher Tragarm (5, 7, 8) Elemente (8, 10) zur lösbaren Aufnahme des Behälterträgers (13) umfasst, wobei mit der Steuereinrichtung (20) der Tragarm (5, 7, 8) verschwenkbar ist, um den Behälter (35) in das Tauchbad (2, 21) einzutauchen, **dadurch gekennzeichnet, dass** der Behälterträger eine im wesentlichen ebene Oberfläche (13) aufweist, die über eine Vielzahl von Tauchbad-Durchgangsöffnungen (14) verfügt, und auf welcher Oberfläche die besagten Behälter (35) angeordnet sind.

2. Vorrichtung nach Anspruch 1, **dadurch gekennzeichnet, dass** die Oberfläche (13) des Behälterträgers (13) im wesentlichen den Querschnitt des Bassins (2) des Tauchbades (21) ausfüllt.

3. Vorrichtung nach Anspruch 1 oder 2, **dadurch gekennzeichnet, dass** der Tragarm (5) so ansteuerbar ist, dass die Oberfläche (13) des Behälterträgers (13) im wesentlichen fluchtend mit der Oberfläche (17) der Vorrichtung ausrichtbar ist.

4. Vorrichtung nach einem der Ansprüche 1 bis 3, **dadurch gekennzeichnet, dass** der Tragarm (5) über einen oder zwei seitliche Arme verfügt, an denen eine Querstange (7) befestigt ist, die selber eine oder zwei Laschen (8) mit Aufnahmeelementen (10) trägt.

5. Vorrichtung nach einem der Ansprüche 1 bis 4, **dadurch gekennzeichnet, dass** mit der Steuereinrichtung (20) der Antrieb des Tragarmes (5, 7, 8) mit einem Rüttel- und/oder Schüttelsignal beaufschlagbar ist.

## Claims

1. Apparatus for dipping a container (35) into an immersion bath (2, 21) for heating foodstuffs, having a control device (20) and having a drivable support arm (5, 7, 8), and also a container carrier (13), wherein one or more containers (35) is/are arranged on the container carrier (13) and wherein the container carrier (13) is fastenable to said support arm (5, 7, 8), said support arm (5, 7, 8) comprising elements (8, 10) for detachably receiving the container carrier (13), wherein the support arm (5, 7, 8) is pivotable by way of the control device (20) in order to dip the container (35) into the immersion bath (2, 21), **characterized in that** the container carrier has a substantially planar surface (13) which has a multiplicity of immersion-bath through-passage openings (14) and on which surface said containers (35) are arranged.

2. Apparatus according to Claim 1, **characterized in that** the surface (13) of the container carrier (13) substantially fills the cross-sectional area of the basin (2) of the immersion bath (21).

3. Apparatus according to Claim 1 or 2, **characterized in that** the support arm (5) is controllable such that the surface (13) of the container carrier (13) can be oriented in a manner substantially aligned with the surface (17) of the apparatus.

4. Apparatus according to one of Claims 1 to 3, **characterized in that** the support arm (5) has one or two lateral arms, to which there is fastened a cross bar (7) which itself carries one or two lugs (8) having receiving elements (10).

5. Apparatus according to one of Claims 1 to 4, **characterized in that** an agitating and/or shaking signal can be applied to the drive of the support arm (5, 7, 8) by way of the control device (20).

## Revendications

1. Dispositif pour plonger un récipient (35) dans un bain d'immersion (2, 21) afin de chauffer des aliments, comprenant un dispositif de commande (20) et un bras de support entraînable (5, 7, 8) ainsi qu'un support de récipient (13), un ou plusieurs récipients (35) étant disposés sur le support de récipient (13) et le support de récipient (13) pouvant être fixé sur ledit bras de support (5, 7, 8), lequel bras de support (5, 7, 8) comprend des éléments (8, 10) pour recevoir de manière amovible le support de récipient (13), le bras de support (5, 7, 8) pouvant pivoter avec le dispositif de commande (20), afin de plonger le récipient (35) dans le bain d'immersion (2, 21), **caractérisé en ce que** le support de récipient présente une surface essentiellement plane (13) qui dispose d'une pluralité d'ouvertures de passage de bain d'immersion (14) et sur laquelle surface sont disposés lesdits récipients (35).

2. Dispositif selon la revendication 1, **caractérisé en ce que** la surface (13) du support de récipient (13) remplit substantiellement la section transversale du bassin (2) du bain d'immersion (21).

3. Dispositif selon la revendication 1 ou 2, **caractérisé en ce que** le bras de support (5) peut être commandé de telle sorte que la surface (13) du support de récipient (13) puisse être orientée essentiellement en affleurement avec la surface (17) du dispositif.

4. Dispositif selon l'une quelconque des revendications 1 à 3, **caractérisé en ce que** le bras de support (5) dispose d'un ou de deux bras latéraux sur lesquels est fixée une traverse (7) qui porte elle-même une ou deux pattes (8) avec des éléments de réception (10).

5. Dispositif selon l'une quelconque des revendications 1 à 4, **caractérisé en ce que** l'entraînement du bras de support (5, 7, 8) peut être sollicité par le dispositif de commande (20) avec un signal de secouage et/ou d'agitation.
